(19) Europäisches Patentamt
European Patent Office
Office européen des brevets

(11) Veröffentlichungsnummer: **0 657 483 A1**

(12) **EUROPÄISCHE PATENTANMELDUNG**

(21) Anmeldenummer: **94119144.7**

(51) Int. Cl.⁶: **C08G 18/67**, C09D 175/16

(22) Anmeldetag: **05.12.94**

(30) Priorität: **11.12.93 DE 4342384**

(43) Veröffentlichungstag der Anmeldung:
**14.06.95 Patentblatt 95/24**

(84) Benannte Vertragsstaaten:
**AT BE CH DE DK ES FR GB IT LI NL PT SE**

(71) Anmelder: **HOECHST AKTIENGESELLSCHAFT**

**D-65926 Frankfurt (DE)**

(72) Erfinder: **Klein, Heinz-Peter, Dr.**
**Gross-Gerauer-Strasse 79**
**D-55130 Mainz (DE)**
Erfinder: **Geisler, Jörg-Peter, Dr.**
**Selztalstrasse 137**
**D-55218 Ingelheim (DE)**

(54) **Wasserverdünnbare Zweikomponenten-Überzugsmasse.**

(57) Wasserverdünnbare Zweikomponenten-Überzugsmasse, enthaltend

a) eine Polyisocyanatkomponente, bestehend aus einem oder mehreren organischen Polyisocyanaten, und

b) eine wäßrige Polyurethan-Dispersion, hergestellt durch radikalisch initiierte Polymerisation von Polyurethan-Makromonomeren mit einem Gehalt an Carbonsäure-, Phosphonsäure- oder Sulfonsäuregruppen, lateralen und/oder terminalen Vinylgruppen, sowie gegebenenfalls Hydroxyl-, Urethan-, Thiourethan- und/oder Harnstoffgruppen.

EP 0 657 483 A1

Gegenstand der Erfindung ist eine wasserverdünnbare Zweikomponenten-Überzugsmasse, enthaltend

a) eine Polyisocyanatkomponente, bestehend aus einem oder mehreren organischen Polyisocyanaten, und

b) eine wäßrige Polyurethan-Dispersion, hergestellt durch radikalisch initiierte Polymerisation von Polyurethan-Makromonomeren mit einem Gehalt an Carbonsäure-, Phosphonsäure- oder Sulfonsäuregruppen, lateralen und/oder terminalen Vinylgruppen, sowie gegebenenfalls Hydroxyl-, Urethan-, Thiourethan- und/oder Harnstoffgruppen.

Bei der Polyisocyanatkomponente a) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente a) weist bei 23 °C im allgemeinen eine Viskosität von 1 bis 20 000 mPa.s auf. Besonders bevorzugt handelt es sich bei der Polyisocyanatkomponente a) um Polyisocyanate oder Polyisocyanatgemische mit ausschließlich aliphatisch und/oder cycloaliphatisch gebundenen Isocyanatgruppen einer zwischen 2,0 und 5,0 liegenden (mittleren) NCO-Funktionalität.

Falls erforderlich können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch im allgemeinen so bemessen, daß in den letztendlich erhaltenen erfindungsgemäßen Beschichtungsmitteln maximal 30 Gew.-% Lösungsmittel vorliegt, wobei auch das gegebenenfalls in den Polymerdispersionen oder -lösungen noch vorliegende Lösungsmittel mit in die Berechnung eingeht. - Als Zusatzmittel für die Polyisocyanate geeignete Lösungsmittel sind beispielsweise aromatische Kohlenwasserstoffe wie beispielsweise "Solventnaphtha" oder auch aprotische Lösungsmittel wie aliphatische Äther (z.B. Diäthylenglykoldimethyläther, Dipropylenglykoldimethyläther), Glykolätherester oder Amide wie N-Methylpyrrolidon oder Dimethylformamid.

Als Komponente a) geeignete Polyisocyanate sind Diisocyanate und insbesondere die sogenannten "Lack-Polyisocyanate" mit aromatisch oder (cyclo)aliphatisch gebundenen Isocyanatgruppen, wobei die letztgenannten aliphatischen Polyisocyanate besonders bevorzugt sind.

Bei den Diisocyanaten handelt es sich um die auf dem Polyurethan- bzw. Lackgebiet bekannten Verbindungen, wie aliphatische, cycloaliphatische oder aromatische Diisocyanate. Diese besitzen vorzugsweise die Formel $Q(NCO)_2$, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat),4,4'-Diisocyanatodicyclohexylmethan,4',4''-Diisocyanatodicyclohexylpropan-(2,2),1,4-Diisocyanatobenzol, 2,4- oder 2,6-Diisocyanatotoluol bzw. Gemische dieser Isomeren, 4,4'- oder 2,4'-Diisocyanatodiphenylmethan, 4',4''-Diisocyanatodiphenylpropan-(2,2), p-Xylylendiisocyanat und $\alpha,\alpha,\alpha',\alpha'$-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 29 28 552 verwiesen.

Sehr gut geeignet sind beispielsweise "Lack-Polyisocyanate" auf Basis von Hexamethylendiisocyanat, $\alpha,\alpha,\alpha',\alpha'$-Tetramethyl-m- und p-xylylendiisocyanat (TMXDI) oder von 1-Isocyanato-3,3,5-trimethyl-4-isocyanatomethylcyclohexan (IPDI) und/oder Bis(isocyanatocyclohexyl)-methan, insbesondere solche, welche ausschließlich auf Hexamethylendiisocyanat basieren. Unter "Lack-Polyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen

Trimerisate von Hexamethylendiisocyanat, wie sie gemäß US-PS 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphanen entstehen. Bevorzugt sind Polyisocyanate, deren Isocyanatgruppen an aliphatische Kohlenstoffatome gebunden sind.

Besonders bevorzugt sind die zuletzt genannten Gemische einer Viskosität bei 23 °C von 1 bis 20 000 mPa.s und einer zwischen 2,0 und 5,0 liegenden NCO-Funktionalität.

Im Rahmen der Erfindung lassen sich mit Vorteil auch Polyisocyanate einsetzen, die in Wasser dispergierbar sind, wie z.B. in den Dokumenten EP-B- 0 061 628, EP-B-0 206059 und EP-B 0 469 389 beschrieben. Solche Polyisocyanate enthalten zusätzliche hydrophile Gruppen, die nichtionisch sein können (z.B. Polyoxyalkylengruppen) oder ionische, bevorzugt anionische Gruppen, z.B. abgeleitet von Carbon-, Sulfon- oder Phosphonsäuren.

Bei den ebenfalls geeigneten, jedoch weniger bevorzugten aromatischen Polyisocyanaten handelt es sich insbesondere um "Lack-Polyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind.

Die Polyisocyanatkomponente a) kann im übrigen aus beliebigen Gemischen der beispielhaft genannten Polyisocyanate bestehen.

Die Polyurethan-Dispersionen b) sind in der DE-A-41 22 266, in der DE-A 41 22 265 und der EP-A-0 098 752 beschrieben. Die zu ihrer Herstellung benötigten Polyurethan-Makromonomere werden durch Polyaddition von Polyhydroxy-Verbindungen (A) aus der Gruppe Polyhydroxypolyäther (A1), Polyhydroxypolyester (A2) oder Polyhydroxy-polycarbonate (A3), gegebenenfalls in Kombination mit niedermolekularen Verbindungen (A4), die zwei oder mehrere funktionelle Gruppen jeweils ausgewählt aus Hydroxy-, Amino- und Mercaptogruppen aufweisen, Monomeren (C) mit mindestens einer Vinylgruppe, die eine (C1) oder mindestens zwei (C2) gegenüber Isocyanat reaktive Gruppen wie Amino-, Mercapto- oder bevorzugt Hydroxy-Gruppen enthalten, weiterhin säuregruppenhaltigen Polyhydroxy-Verbindungen (D) wie Polyhydroxycarbonsäuren, Polyhydroxyphosphonsäuren oder Polyhydroxysulfonsäuren und/oder gegebenenfalls säuregruppenhaltige Polyaminen oder Polymercaptanen (D') und Polyisocyanaten (B) hergestellt.

Die Polyhydroxyverbindungen A werden ausgewählt aus den Gruppen der Polyhydroxy-polyäther (A1), nämlich Verbindungen der Formel

$$H—[O—(CHR)_n]_m—OH$$

in der

- R Wasserstoff oder ein niedriger Alkylrest, gegebenenfalls mit verschiedenen Substituenten,
- n eine Zahl von 2 bis 6 und
- m eine Zahl von 10 bis 120 ist.

Beispiele sind Poly(oxytetramethylen)glykole, Poly(oxyäthylen)glykole und Poly(oxypropylen)glykole.

Die bevorzugten Polyhydroxypolyäther sind Poly(oxypropylen)glykole mit einer Molmasse im Bereich von 400 bis 5000 g/mol.

Die Polyhydroxy-polyester (A2) werden hergestellt durch Veresterung von organischen Polycarbonsäuren oder ihren Anhydriden mit organischen Polyolen. Die Polycarbonsäuren und die Polyole können aliphatische oder aromatische Polycarbonsäuren und Polyole sein.

Die zur Herstellung verwendeten Polyole schließen Alkylenglykole wie Äthylenglykol, Butylenglykol, Hexandiol-1,6, Neopentylglykol und andere Glykole, wie z.B. Dimethylolcyclohexan, 2,2-Bis(4-hydroxycyclohexyl)propan sowie Trishydroxyalkylalkane, wie z.B. Trimethylolpropan und Tetrakishydroxyalkylalkane, wie z.B. Pentaerythrit ein.

Die Säurekomponente des Polyesters besteht in erster Linie aus niedermolekularen Polycarbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebacinsäure, Maleinsäure, Glutarsäure, Hexachlorheptandicarbonsäure, Alkyl- und Alkenylbernsteinsäuren, wie z.B. n-Octenylbernsteinsäure sowie n- oder iso-Dodecenylbernsteinsäure, Tetrachlorphthalsäure, Trimellithsäure und Pyromellithsäure. Anstelle dieser Säuren können auch ihre Anhydride, soweit diese existieren, verwendet werden. Als Polycarbonsäuren lassen sich auch Dimer- und Trimerfettsäuren einsetzen.

Unter den Begriffen Polyhydroxy-polyäther und Polyhydroxy-polyester sind auch solche Produkte dieser Art zu verstehen, die Monomere mit Carboxylat-, Phosphonat- oder Sulfonat-gruppen enthalten.

Ferner lassen sich auch Polyhydroxy-polyester, die sich von Lactonen ableiten benutzen. Diese Produkte erhält man beispielsweise durch die Umsetzung eines ε-Caprolactons mit Polyolen. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{\displaystyle O}{\|}}{C}-(CHR)_n-CH_2O-$$

entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden:

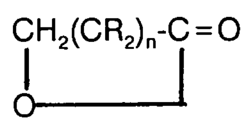

in der n und R die bereits angegebene Bedeutung haben.

Die bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Polyolen sind Äthylenglykol, 1,3-Propandiol, 1,4-Butandiol, Hexandiol-1,6, Dimethylolcyclohexan, Trimethylolpropan und Pentaerythrit.

Als Ausgangsverbindungen kommen weiterhin Polycarbonatpolyole (A3) bzw. Polycarbonat-diole in Frage, die der allgemeinen Formel

$$HO-R—(O-\overset{\overset{\displaystyle O}{\|}}{C}-O-R-)_n—OH$$

entsprechen, worin R einen Alkylenrest und n 10 bis 120 bedeuten. Diese OH--funktionellen Polycarbonate lassen sich durch Umsetzung von Polyolen wie Propandiol-1,3, Butandiol-1,4, Hexandiol-1,6, Diäthylenglykol, Triäthylenglykol, 1,4-Bishydroxymethylcyclohexan, 2,2-Bis(4-hydroxycyclohexyl)propan, Neopentylglykol, Trimethylolpropan, Pentaerythrit mit Dicarbonaten, wie Dimethyl-, Diäthyl- oder Di-phenylcarbonat, oder Phosgen herstellen. Gemische solcher Polyole können ebenfalls eingesetzt werden.

Die zuvor beschriebenen Polyhydroxy-polyäther, Polyhydroxy-polyester und Polyhydroxy-polycarbonate können auch gemeinsam eingesetzt werden. Darüberhinaus können diese Polyhydroxyverbindungen auch zusammen mit unterschiedlichen Mengen an niedermolekularen, isocyanatreaktiven Polyolen, Polyaminen, Aminoalkoholen, Mercaptoalkoholen oder Polymercaptanen (A4) eingesetzt werden. Als Verbindungen dieser Art kommen beispielsweise Äthylenglykol, Butandiol, Pentaerythrit, Trimethylolpropan, Äthylendiamin, Propylendiamin, Hexamethylendiamin, $\beta$-Mercaptoäthanol, $\beta$-Aminoäthanol in Frage.

Die Monomeren (C) enthalten eine (C1) oder mindestens 2 (C2) gegenüber Isocyanat reaktive Gruppen, wie Amino-, Mercapto- oder Hydroxy-Gruppen, bevorzugt sind Hydroxygruppen, sowie mindestens eine Vinylgruppe.

Beispiele für die Gruppe (C1) sind die Hydroxyalkyl(meth)acrylate wie Hydroxyäthyl- und Hydroxypropyl(meth)acrylat, die Umsetzungsprodukte aus Monoepoxiden und $\alpha,\beta$-ungesättigten Carbonsäuren wie z.B. Reaktionsprodukte von Versaticsäureglycidylestern und (Meth)Acrylsäure oder aus $\alpha,\beta$-ungesättigten Glycidylestern und Monocarbonsäuren wie z.B. Reaktionsprodukte von Glycidyl(meth)acrylat und Stearinsäure oder Leinölfettsäure und schließlich z.B. Amino- oder Mercapto- gruppenhaltige Acrylmonomere wie z.B. t-Butylaminoäthyl(meth)acrylat.

Beispiele für Monomere der Gruppe (C2) sind Di- und Poly-hydroxyvinylverbindungen wie Allyl- oder Vinyläther mehrwertiger Alkohole oder Phenole, z.B. Trimethylolpropan-monovinyläther, Trimethylolpropan-monoallyläther, Pentaerythritmono-vinyl- oder -allyläther, Ester mehrwertiger Alkohole mit ungesättigten Carbonsäuren wie z.B. Trimethylolpropan-mono(meth)acrylat, Glycerinmono(meth)acrylat, Addukte von $\alpha,\beta$-ungesättigten Carbonsäuren wie (Meth)Acrylsäure, Itaconsäure oder Vinylessigsäure an Diepoxide, z.B. Bisphenol A-Diglycidyläther oder Hexandioldiglycidyläther, Addukte von Dicarbonsäuren wie Adipinsäure oder Terephthalsäure an (Meth)Acrylsäureglycidylester. Entsprechende Vinylverbindungen mit zwei oder mehr Amino- oder Mercaptogruppen leiten sich beispielsweise ab von Polyaminen und ungesättigten Carbonsäuren, von N-Vinylpolyaminen oder z.B. von ungesättigten Polycarbonsäuren, die mit 2-Mercaptopropanol verestert sind wie Bis-2-mercaptopropylmaleinat.

Als weiterer Baustein für die Herstellung der Polyurethan-Dispersionen werden niedermolekulare Polyole (D), vorzugsweise Diole, eingesetzt, die weiterhin noch eine ionische Gruppe in Form der Carbonsäure-, Phosphonsäure- oder Sulfonsäuregruppe enthalten. Beispiele für diese Gruppe von Monomeren sind $\alpha$-$C_2$-$C_{10}$-Bishydroxycarbonsäuren wie z.B. Dihydroxypropionsäure, Dimethylolpropionsäure, Dihydroxyäthylpropionsäure, Dimethylolbuttersäure, Dihydroxybernsteinsäure, Dihydroxybenzoesäure oder 3-Hydroxy-2-hydroxymethylpropansulfonsäure, 1,4-Dihydroxybutansulfonsäure. Die Bausteine (D') sind analoge Polyamine und Polymercaptane (vorzugsweise Diamine und Dimercaptane) mit Säuregruppen, wie z.B. Diaminobenzoesäure, Lysin, Dimercaptobernsteinsäure, Dimercaptopropansulfonsäure.

Diese Monomeren können vor der Umsetzung mit einem tertiären Amin wie beispielsweise Trimethylamin, Triäthylamin, Dimethylanilin, Diäthylanilin oder Triphenylamin neutralisiert werden, um eine Reaktion der Säuregruppe mit dem Isocyanat zu vermeiden. Ist die Wahrscheinlichkeit einer solchen Reaktion nur gering, können die Säuregruppen auch erst nach ihrem Einbau in das Polyurethanmakromonomer neutralisiert werden. Die Neutralisation erfolgt dann mit wäßrigen Lösungen von Alkalihydroxiden oder mit Aminen, zum Beispiel mit Trimethylamin, Triäthylamin, Dimethylanilin, Diäthylanilin, Triphenylamin, Dimethyläthanolamin, Aminoäthylpropanol, Dimethylaminomethylpropanol, Dimethylisopropanolamin oder mit Ammoniak. Daneben kann die Neutralisation auch mit Mischungen aus Aminen und Ammoniak vorgenommen werden.

Beispiele für geeignete Polyisocyanate (B) sind Trimethylendiisocyanat, Tetramethylendiisocyanat, Pentamethylendiisocyanat, Hexamethylendiisocyanat, Propylendiisocyanat, Äthylendiisocyanat, 2,3-Dimethylbutylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)-methan, Bis-(4-isocyanatophenyl)methan, 4,4'-Diisocyanatodiphenyläther, 2,3-Bis-(8-isocyanatooctyl)-4-octyl-5-hexylcyclohexen, Tetramethylxylylendiisocyanate, Trimethylhexamethylendiisocyanate, Isocyanurate von obigen Diisocyanaten oder Allophanate von obigen Diisocyanaten. Gemische solcher Polyisocyanate können ebenfalls eingesetzt werden.

Es ist von besonderer Bedeutung für die Polyurethan-Dispersionen b), daß die Makromonomeren, die zu diesen Dispersionen führen, terminale und/oder laterale Vinylgruppen enthalten. Der Begriff "terminale Vinylgruppen" soll solche Vinylgruppen bezeichnen, die am Anfang oder am Ende der Polymerkette hängen. Der Begriff "laterale Vinylgruppen" kennzeichnet solche Vinylgruppen, die nicht am Anfang oder Ende einer Polymerkette hängen. Der Einbau von terminalen Vinylgruppen erfolgt in der Weise, daß ein Präpolymer, das durch Reaktion der Polyole (A) und der Polyhydroxycarbon-, Polyhydroxyphosphon- oder Polyhydroxysulfonsäuren (D) mit dem Polyisocyanat (B) erhalten wurde und das freie Isocyanat-Gruppen

enthält, mit einem Vinylmonomer (C) der oben genannten Art umgesetzt wird, das eine gegenüber Isocyanatgruppen reaktive Gruppe enthält (C1).

Der Einbau von lateralen Vinylgruppen geschieht durch Zusatz von Vinylmonomeren (C2), die mindestens zwei gegenüber Isocyanat reaktive Gruppen und mindestens eine Vinylgruppe enthalten.

Die Monomeren (C2) können dabei entweder direkt den Polyhydroxyverbindungen (A) vor der Reaktion mit dem Polyisocyanat (B) zugesetzt werden, oder sie werden in einer separaten Reaktionsstufe mit einem isocyanatfunktionellen Urethan-Makromonomer unter Kettenverlängerung umgesetzt.

Die aus diesen Monomeren aufgebauten Makromonomeren können zusätzlich noch durch Einbau von Aminen, Alkoholen und/oder Thioalkoholen modifiziert werden. Hierzu wird das zunächst erzeugte Zwischenprodukt, das terminale Isocyanatreste enthält, nicht allein mit dem Vinylmonomer (C) umgesetzt, sondern dieses Monomer wird gemeinsam mit Aminen, Alkoholen und/oder Thioalkoholen umgesetzt. Hierfür kommen beispielsweise in Frage primäre Amine wie Propylamin, Butylamin, Pentylamin, 2-Amino-2-methylpropanol, Äthanolamin, Propanolamin; sekundäre Amine wie Diäthanolamin, Dibutylamin, Diisopropanolamin; primäre Alkohole wie Methanol, Äthanol, Propanol, Butanol, Hexanol, Dodecanol, Stearylalkohol; sekundäre Alkohole wie Isopropanol, Isobutanol und die entsprechenden Thioalkohole.

Die Herstellung der Zwischenprodukte in den ersten Stufen erfolgt nach den üblichen und in der Urethan-Chemie bekannten Methoden. Hierbei können als Katalysatoren tertiäre Amine, wie z.B. Triäthylamin, Dimethylbenzylamin, Diazabicyclooctan sowie Dialkylzinn (IV)-Verbindungen, wie z.B. Dibutylzinndilaurat, Dibutylzinndichlorid, Dimethylzinndilaurat, eingesetzt werden. Die Reaktion findet ohne Lösemittel in der Schmelze, in Anwesenheit eines Lösemittels oder in Anwesenheit eines sogenannten Reaktiwerdünners (s.u.) statt. Als Lösemittel kommen solche in Frage, die späterhin durch Destillation entfernt werden können, beispielsweise Dioxan, Methyläthylketon, Methylisobutylketon, Aceton, Tetrahydrofuran, Toluol, Xylol. Diese Lösemittel können ganz oder teilweise nach der Herstellung der Polyurethan-Makromonomeren oder nach der radikalischen Polymerisation abdestilliert werden. Daneben kann man die Reaktion auch in einem hochsiedenden, wasserverdünnbaren Lösemittel, zum Beispiel in N-Methylpyrrolidon, durchführen, das dann in der Dispersion verbleibt. Vor dem Dispergierprozeß können noch weitere Lösemittel, wie z.B. Glykoläther und deren Ester zugesetzt werden. Geeignete Glykoläther sind z.B. Butylglykol, Butyldiglykol, Methoxypropanol, Dipropylenglykolmonomethyläther oder Diglykoldimethyläther. Bei den Reaktivverdünnern (E) handelt es sich um $\alpha$, $\beta$-ungesättigte Monomere, die in der Endstufe mit den Vinylgruppen enthaltenden Makromonomeren copolymerisiert werden. Beispiele für solche Reaktivverdünner sind $\alpha$, $\beta$-ungesättigte Vinylmonomeren wie Alkyl-acrylate, -methacrylate und -crotonate mit 1 bis 20 Kohlenstoffatomen im Alkylrest, Di-, Tri-, und Tetraacrylate, -methacrylate, -crotonate von Glykolen, tri- und tetrafunktionellen Alkoholen, substituierte und unsubstituierte Acryl- und Methacrylamide, Vinyläther, $\alpha$, $\beta$-ungesättigte Aldehyde und Ketone, Vinylalkylketone mit 1 bis 20 Kohlenstoffatomen im Alkylrest, Vinyläther, Vinylester, Diester von $\alpha$,$\beta$-ungesättigten Dicarbonsäuren, Styrol, Styrolderivate, wie z.B. $\alpha$-Methylstyrol.

Die Herstellung der Polyurethan-Makromonomeren kann auf verschiedenen Wegen erfolgen.

Der erste Weg ist die Umsetzung der Polyhydroxyverbindungen (A) mit den Polyisocyanaten (B) unter den im letzten Absatz genannten Bedingungen. Die weiteren Monomeren, nämlich die Polyhydroxysäuren (D) oder die Polyamino- oder Polymercaptosäuren (D') und die Vinylmonomeren (C2), die gegenüber Isocyanat mindestens zwei reaktive Gruppen tragen, werden zu dem Monomer (A) von Anfang an zugesetzt. Die Mengenverhältnisse der Reaktanden, insbesondere an Polyisocyanat, werden dabei so gewählt, daß ein Makromonomer mit terminalen Hydroxylgruppen entsteht. Dieses Makromonomer, das außerdem noch Carboxyl-, Phosphonsäure- oder Sulfonsäuregruppen und laterale Vinylgruppen enthält, wird nach Überführung in eine wäßrige Dispersion über die Vinylgruppen mit radikalbildenden Initiatoren polymerisiert unter Bildung der Polyurethan-Dispersion, wobei in diesem Fall das Polyurethan noch Hydroxylgruppen trägt.

Ein zweiter Weg ist entsprechend der ersten Verfahrensweise, jedoch werden die Mengenverhältnisse so gewählt, daß ein Makromonomer mit terminalen Isocyanatgruppen entsteht. Daneben enthält dieses Makromonomer noch Carboxyl-, Phosphonsäure- oder Sulfonsäuregruppen sowie laterale Vinylgruppen. Die freien Isocyanatgruppen dieses Makromonomers werden dann mit primären oder sekundären Aminen, Alkoholen oder Thioalkoholen unter Bildung von Harnstoff-, Urethan- oder Thiourethangruppen umgesetzt. Das so modifizierte Makromonomer wird dann ebenfalls über die Vinylgruppen mit radikalbildenden Initiatoren polymerisiert.

Ein dritter Weg ist analog dem Weg 2, jedoch werden die freien Isocyanatgruppen des Makromonomeren umgesetzt mit einem Vinylmonomeren (C1), das eine gegenüber Isocyanat reaktive Gruppe trägt, gegebenenfalls in Mischung mit primären oder sekundären Aminen, Alkoholen oder Thioalkoholen. Man gelangt so zu einem Urethan-Makromonomer mit lateralen und terminalen Vinylgruppen.

Urethan-Makromonomere mit nur terminalen Vinylgruppen erhält man durch Umsetzung von Polyhydroxyverbindungen (A), Polyhydroxysäuren (D) und/oder Polyamino- oder Polymercaptosäuren (D') und

den Monomeren (C1) mit einer gegenüber Isocyanat reaktive Gruppe und einer Vinylgruppe mit den Polyisocyanaten (B). Dabei wirken die Monomeren (C1) als Kettenabbrecher bei der Polyaddition. Diese Urethan-Makromonomere lassen sich auch in mehreren Reaktionsschritten herstellen, beispielsweise durch Umsetzen eines Isocyanat-terminierten, vinylgruppenfreien Urethan-Makromonomeren aus den Bausteinen (A), (B) und (D) bzw. (D') mit Monomeren (C1).

Ein fünfter Weg ist der nachträgliche Einbau der Polyhydroxysäuren (D) in das zuvor gebildete Urethan-Makromonomer mit Isocyanat-Endgruppen. Dabei wird zunächst eine Mischung der Polyhydroxyverbindungen (A) mit den Polyisocyanaten (B) und dem gegenüber Isocyanat reaktiven Vinylmonomeren (C) umgesetzt, wobei auf Grund der eingesetzten Mengen Makromonomere mit Isocyanat-Endgruppen erhalten werden. Diese werden im Folgeschritt mit den Polyhydroxysäuren (D) oder mit den säuregruppenhaltigen Polyaminen oder Polymercaptanen (D') zur Reaktion gebracht.

Bevorzugt arbeitet man in der Weise, daß man die Dihydroxyvinylverbindung nicht gleichzeitig mit dem Polyol bei der Polyaddition einbaut, sondern indem man zunächst ein Präpolymer allein aus Polyol, Polyisocyanat und gegebenenfalls Polyhydroxysäure zu einem OH- oder NCO-terminierten Präpolymeren umsetzt. In einer zweiten Stufe wird dieses Präpolymer dann mit der Dihydroxyvinylverbindung und weiterem Polyisocyanat zu dem Vinylgruppen enthaltenden OH- oder NCO-terminierten Makromonomer umgesetzt.

Die Mengenverhältnisse werden dabei so gewählt, daß das Polyisocyanat im Überschuß vorliegt, so daß das entstehende Präpolymer neben den Carboxyl-, Phosphonsäure- bzw. Sulfonsäuregruppen noch freie Isocyanatgruppen enthält. Bevorzugt kann man auch so vorgehen, daß man zunächst das Polyisocyanat im Unterschuß einsetzt, um so ein Präpolymer mit freien Hydroxylgruppen zu erhalten. In einer zusätzlichen Stufe wird dieses Präpolymer dann mit weiterem Polyisocyanat umgesetzt, um so ebenfalls ein Präpolymer mit freien Isocyanatgruppen zu erhalten.

Die über diese verschiedenen Wege erhaltenen Makromonomere werden dann neutralisiert, falls die sauren Gruppen in den Monomeren, die solche Gruppen tragen, nicht bereits von vornherein in neutralisierter Form eingesetzt wurden. Die Neutralisation erfolgt dann mit wäßrigen Lösungen von Alkalihydroxiden oder mit Aminen, zum Beispiel mit Trimethylamin, Triäthylamin, Dimethylanilin, Diäthylanilin, Triphenylamin, Dimethyläthanolamin, Aminomethylpropanol, Dimethylaminomethylpropanol, Dimethylisopropanolamin oder mit Ammoniak. Daneben kann die Neutralisation auch mit Mischungen aus Aminen und Ammoniak vorgenommen werden.

Zur Herstellung der Polyurethan-Dispersionen b) werden Makromonomere, die Vinylgruppen enthalten, durch Zugabe von Wasser in eine wäßrige Dispersion überführt und nach an sich bekannten Methoden durch radikalbildende Initiatorsysteme polymerisiert. Bei dieser Polymerisation können, falls nicht von vornherein als sogenannte Reaktivverdünner (E) vorhanden, Monomere dieser Art, wie zuvor beschrieben, in das Polyurethan einpolymerisiert werden. Weiterhin können unmittelbar vor oder während der radikalischen Polymerisation auch noch Carboxyl-, Hydroxyl-, Amino-, Äther- und Mercapto-funktionelle $\alpha,\beta$-ungesättigte Vinylmonomere zugegeben werden. Beispiele hierfür sind Hydroxyäthyl(meth)acrylat, Hydroxypropyl(meth)-acrylat, (Meth)acrylsäure, Crotonsäure, Glycidylmethacrylat, t-Butylaminoäthylmethacrylat oder Dimethylaminoäthylmethacrylat. Der Gehalt an copolymerisierten Vinylmonomeren beträgt 0 bis 95 Gew.-%, bevorzugt 5 bis 70 Gew.-%, bezogen auf den Feststoff der Polyurethan-Dispersion. Das Verhältnis von Weich- und Hartsegmenten in den Polyurethan-Makromonomeren beträgt 0,30 bis 6, besonders bevorzugt von 0,8 bis 3. Als Initiatoren für die Polymerisation kommen die bekannten radikalbildenden Initiatoren in Frage wie Ammoniumperoxodisulfat, Kaliumperoxodisulfat, Natriumperoxodisulfat, Wasserstoffperoxid, organische Peroxide, wie z.B. Cumolhydroperoxid, t-Butylhydroperoxid, Di-tert.-Butylperoxid, Dioctylperoxid, tert.-Butylperpivalat, tert.-Butylperisononanoat, tert.-Butylperethylhexanoat, tert.-Butylperneodecanoat, Di-2-äthylhexylperoxodicarbonat, Diisotridecylperoxodicarbonat sowie Azoverbindungen, wie z.B. Azobis(isobutyronitril), Azobis(4-cyanovaleriansäure), oder die üblichen Redoxsysteme, z.B. Natriumsulfit, Natriumdithionit, Ascorbinsäure und organische Peroxide oder Wasserstoffperoxid, gegebenenfalls in Verbindung mit Beschleunigern wie Eisen- oder Cer-Salzen. Außerdem können noch Regler (Mercaptane), Emulgatoren, Schutzkolloide und andere übliche Hilfsstoffe zugegeben werden.

Erfolgte die Herstellung des Makromonomers in einem abdestillierbaren Lösemittel, das ein Azeotrop mit Wasser bildet oder aus wäßriger Phase fraktionierbar ist, beispielsweise in Aceton, Dioxan, Methyläthylketon, Methylisobutylketon, Tetrahydrofuran, Toluol oder Xylol, so wird dieses Lösemittel aus der Dispersion abdestilliert. Man erhält in allen Fällen eine wäßrige Polyurethan-Dispersion.

Die Säurezahlen dieser Polyurethane liegen im Bereich von 5 bis 80, besonders bevorzugt im Bereich von 10 bis 40 mg KOH pro 1 g Festharz. Die Hydroxylzahlen dieser Polyurethane liegen im Bereich von 5 bis 150, bevorzugt von 10 bis 120 mg KOH pro 1 g Festharz.

Weitere Einzelheiten zur Herstellung der Makromonomeren und deren Polymerisation zu den erfindungsgemäßen Polyurethan-Dispersionen ergeben sich aus den folgenden allgemeinen Verfahrensbeschreibungen. Diese Verfahrensbedingungen stellen bevorzugte Ausführungsformen dar.

**1. Lösemittelfrei**

**a. ohne Hilfslösemittel**

Bei Temperaturen von 100 bis 150 °C, besonders bevorzugt von 120 bis 135 °C, werden die Polyhydroxysäure (D) und gegebenenfalls niedermolekulare Polyole (A4) in einem Polyol (A) mit einem mittleren Molekulargewicht von 400 bis 5000 gelöst und mit einem Polyisocyanat (B) oder Polyisocyanatmischungen zu einem OH-terminierten Produkt mit einer mittleren Molmasse (Mn) von 500 bis 12000, besonders bevorzugt von 600 bis 8000, umgesetzt. Nach dem Abkühlen auf eine Temperatur von 30 bis 100 °C, besonders bevorzugt von 50 bis 80 °C, wird ein nicht isocyanatreaktives Vinylmonomer (E) zugegeben. Bei dieser Temperatur wird durch weitere Zugabe von Polyisocyanat ein NCO-terminiertes Harz aufgebaut, das anschließend mit einer NCO-reaktiven Vinylverbindung (C1 und/oder C2) zu einem Polyurethanmakromonomeren mit einer mittleren Molmasse von 700 bis 24000, besonders bevorzugt von 800 bis 16000 g/mol, umgesetzt wird. Gegebenenfalls werden an dieser Stelle noch Amine, Alkohole oder Mercaptane zugesetzt, die mit noch vorhandenen Isocyanatgruppen unter Bildung von terminalen Harnstoff-, Urethan- oder Thiourethangruppen reagieren. Diese so erhaltene Harzlösung wird nach der Neutralisation mit Aminen oder anderen Basen in Wasser dispergiert. Zu der so erhaltenen Dispersion können noch weitere Vinyl-Comonomeren (E) vor oder während der folgenden radikalschen Polymerisation gegeben werden. In der wäßrigen Dispersion wird dann mit radikalbildenden Initiatoren die freie Vinylverbindung bei einer Temperatur von 0 bis 95 °C, besonders bevorzugt von 40 bis 95 °C, und bei Verwendung von Redoxsystemen bei einer Temperatur von 30 bis 85 °C polymerisiert. Dabei entsteht ein lösemittelfreie Polyurethan-Dispersion.

**b. mit Hilfslösemittel**

Im Unterschied zu Verfahren 1.a. werden hier alle Polyol-Komponenten (A), (D) in einem aus der wäßrigen Phase fraktionierbaren bzw. mit Wasser ein Azeotrop bildenden Lösemittel gelöst und direkt mit Polyisocyanat (B) oder Polyisocyanatmischungen zum NCO-terminierten Produkt umgesetzt. Der Lösemittelgehalt beträgt 1 bis 80 Gew.-%, besonders bevorzugt 10 bis 50 Gew.-%, bezogen auf den Festkörper des Polyurethan-Makromonomers. Die Temperatur für diesen Schritt liegt zwischen 30 und 100 °C, besonders bevorzugt zwischen 50 und 80 °C. Nach der Umsetzung mit einer isocyanatreaktiven Vinylverbindung (C1 und/oder C2) zu einem Polyurethan-Makromonomeren mit einer Mol- masse von 500 bis 30000, besonders bevorzugt von 700 bis 20000 g/mol, wer- den gegebenenfalls noch Amine, Alkohole oder Mercaptane zugesetzt, die mit noch vorhandenen Isocyanatgruppen unter Bildung von terminalen Harnstoff-, Urethan- oder Thiourethangruppen reagieren. Diese so erhaltene Harzlösung wird nach der Neutralisation mit Aminen oder anderen Basen in Wasser dispergiert. - Anschließend wird das Hilfslösemittel, eventuell unter leichtem Vakuum, aus der wäßrigen Phase destilliert. Zu dieser lösemittelfreien Dispersion können noch Vinyl-Comonomere (E) vor oder während der folgenden radikalischen Polymerisation gegeben werden. Danach wird mit radikalbildenden Initiatoren bei einer Temperatur zwischen 0 und 95 °C, besonders bevorzugt zwischen 40 und 95 °C, bei Verwendung von Redoxsystemen bei einer Temperatur von 30 bis 85 °C zu einer lösemittelfreien Polyurethan-Dispersion polymerisiert.

**2. Lösemittelhaltig**

Bei Benutzung eines nichtdestillierbaren Hilfslösemittels, wie zum Beispiel N-Methylpyrrolidon, wird genauso wie in Verfahren 1.b. vorgegangen, wobei aber nach dem Dispergieren die Destillation entfällt und gegebenenfalls vor oder während der radikalischen Polymerisation Vinylmonomere (E) zugegeben werden können. Die Polymerisation wird wie in Verfahren 1.b. durchgeführt. Der Lösemittelgehalt liegt im Bereich von 0,1 bis 30 Gew.-%, besonders bevorzugt von 1 bis 15 Gew.-%, bezogen auf die gesamte Bindemittel-Dispersion.

Der Gehalt an Polyurethanharz b) (berechnet als Festkörper) in der wäßrigen Überzugsmasse beträgt im allgemeinen 5 bis 40, vorzugsweise 15 bis 30 Gew.-%, bezogen auf die gesamte Überzugsmasse.

Neben dem Polyurethanharz kann die wäßrige Überzugsmasse als Bindemittel noch bis zu 60, vorzugsweise bis zu 30 Gew.-%, bezogen auf das Polyurethanharz, anderer oligomerer oder polymerer

Materialien enthalten, wie wasserlösliche oder wasserdispergierbare Phenolharze, Polyesterharze, Epoxidharze, Melaminharze oder Acrylharze etc., wie beispielsweise in der EP-A 089 497 beschrieben.

Zur Herstellung der gebrauchsfertigen Beschichtungsmittel wird die Polyisocyanatkomponente a) in der wäßrigen Dispersion/Lösung des Polyurethanharzes b) emulgiert, wobei das gelöste oder dispergierte Polyurethanharz die Funktion eines Emulgators für das zugesetzte Polyisocyanat a) übernimmt.

Die Durchmischung kann durch einfaches Verrühren bei Raumtemperatur erfolgen. Vorzugsweise werden aber zur Erzielung einer möglichst homogenen Durchmischung der Komponenten a) und b) geeignete Aggregate herangezogen, wie z.B. Schnellrührer oder schnell laufende Dispergieraggregate. Ebenfalls geeignet sind die dem Fachmann bekannten 2K-Applikationsanlagen, in denen beide Komponenten kurz vor der Applikation mittels geeigneter Mischkammern vermischt werden. Die Menge der Polyisocyanatkomponente wird dabei so bemessen, daß ein NCO/OH-Äquivalentverhältnis, bezogen auf die Isocyanatgruppen der Komponente a) und die alkoholischen Hydroxylgruppen der Komponente b) von 0,5:1 bis 5:1, vorzugsweise 0,8:1 bis 4:1 resultiert.

Vor der Zugabe der Polyisocyanatkomponente a) können der Polyurethanharz-Dispersion b) der Polymeren die üblichen Hilfs- und Zusatzmittel der Lacktechnologie einverleibt werden. Hierzu gehören zum Beispiel Entschäumungsmittel, Verlaufsmittel, slip-Mittel, Netzmittel, Dipergierhilfsmittel, organische und anorganische Füllstoffe und Pigmente, organische und anorganische Säuren und Basen, Schutzkolloide, Emulgatoren, Konservierungsmittel etc.

Die so erhaltenen erfindungsgemäßen Überzugsmittel eignen sich für praktisch alle Einsatzgebiete, in denen heute lösemittelhaltige, lösemittelfreie oder andersartige wäßrige Anstrich- oder Beschichtungssysteme mit einem verbesserten Eigenschaftsprofil Verwendung finden, wobei die zu beschichtenden Substrate zum Beispiel aus Metall (Eisen und auch Nichteisenmetalle), mineralischen Baustoffen, wie Kalk, Zement oder Gips, Faser-Zement-Baustoffen, Beton, Holz oder Holzwerkstoffen, Papier, Asphalt, Bitumen, Kunststoffen diverser Art, Kompositwerkstoffen, Glas, Keramik, Textilien oder Leder bestehen können. Bei den metallenen Substraten handelt es sich bevorzugt um Automobile und Schienenfahrzeuge.

Bei den erfindungsgemäßen Überzugsmassen handelt es sich beispielsweise um (Einlaß-) Grundierungen, Füller, pigmentierte oder transparente Decklacke bzw. Klarlacke.

Die Applikation der erfindungsgemäßen Überzugsmassen kann mit allen, dem Fachmann bekannten Methoden erfolgen, beispielsweise durch Streichen, Walzen, Gießen, Rakeln, Tauchen und insbesondere durch Spritzen, wobei die unterschiedlichsten Spritzverfahren, wie Luftdruck-, airless, airmix oder Elektrostatik-Spritzverfahren unter Verwendung von 1 - oder 2-Komponenten-Spritzanlagen zur Anwendung kommen können.

Die Trocknung bzw. Aushärtung der erfindungsgemäßen Bindemittelkombinationen bzw. der darauf basierenden Beschichtungen erfolgt bei Temperaturen von 10 - 250 °C, bevorzugt von 10 - 100 °C für eine ausreichend lange Zeit.

Die Erfindung wird durch die nachstehend aufgeführten Beispiele näher erläutert:

**Beispiel 1:**

252,0 g eines Polyesters, hergestellt aus Hexandiol-1,6, Isophthalsäure, Adipinsäure und Dodecenylbernsteinsäureanhydrid, mit einer Hydroxyl-Zahl von 84 und einer Säurezahl unter 2 werden zusammen mit 50,2 g Dimethylolpropionsäure auf 130 °C erhitzt und bei dieser Temperatur gehalten, bis eine homogene Lösung vorliegt. Anschließend werden über einen Zeitraum von 20 bis 25 Minuten 106,0 g Tetramethylxylylendiisocyanat unter Rühren dosiert und weiter bei 130 °C so lange gerührt, bis keine freien Isocyanatgruppen mehr vorliegen. Nach Abkühlung auf 70 °C werden 2,5 g Butandiol-1,4, 11,8 g Glycerin-methacrylat, 131,3 g Methylmethacrylat, und 0,3 g 2,6-Di-tert.-butyl-4-methylphenol rasch zugegeben und homogenisiert. Anschließend werden 81,6 g Tetramethylxylylendiisocyanat über einen Zeitraum von 20 Minuten dosiert und bei 70 °C umgesetzt, bis der Gehalt an freien Isocyanatgruppen 1,39 Gew.-%, bezogen auf die Gesamteinwaage, beträgt. In die so erhaltene Präpolymer-Lösung werden 21,6 g Diäthanolamin rasch zugegeben und 10 Minuten homogenisiert. Nach der Dosierung von 28,4 g Triäthylamin, 15,9 g Methylmethacrylat und 28,0 g 2-Hydroxyäthylmethacrylat werden 1087,6 g Wasser mit einer Temperatur von 70 °C unter intensivem Rühren zu der Präpolymer-Lösung gegeben. Anschließend wird die Temperatur auf 80 °C erhöht und 0,7 g tert.-Butylhydroperoxid (80 %ig in Di-tert.-Butylperoxid) rasch zugetropft. Nach weiteren 30 Minuten wird eine Lösung von 1,3 g Ascorbinsäure und 130 g Wasser über einen Zeitraum von 90 Minuten dosiert. Die Temperatur wird für eine weitere Stunde bei 80 °C gehalten.

Die resultierende Polyurethan-Acryl-Hybrid-Dispersion wird auf Raumtemperatur abgekühlt und durch ein 5 µm Filtergewebe filtriert. Die Dispersion besitzt einen Festkörpergehalt von 36 % und einen pH-Wert von 7,0.

**Beispiel 2:**

252,0 g eines Polyesters, hergestellt aus Hexandiol-1,6, Isophthalsäure, Adipinsäure und Dodecenylbernsteinsäureanhydrid, mit einer Hydroxyl-Zahl von 84 und einer Säurezahl unter 2 werden zusammen mit 50,2 g Dimethylolpropionsäure auf 130 °C erhitzt und bei dieser Temperatur gehalten, bis eine homogene Lösung vorliegt. Anschließend werden über einen Zeitraum von 20 bis 25 Minuten 106,0 g Tetramethylxylylendiisocyanat unter Rühren dosiert und weiter bei 130 °C so lange gerührt, bis keine freien Isocyanatgruppen mehr vorliegen. Nach Abkühlung auf 70 °C werden 2,5 g Butandiol-1,4, 11,8 g Glycerin-methacrylat, 131,3 g Methylmethacrylat, und 0,3 g 2,6-Di-tert.-butyl-4-methylphenol rasch zugegeben und homogenisiert. Anschließend werden 81,6 g Tetramethylxylylendiisocyanat über einen Zeitraum von 20 Minuten dosiert und bei 70 °C umgesetzt, bis der Gehalt an freien Isocyanatgruppen 1,39 Gew.-%, bezogen auf die Gesamteinwaage, beträgt. In die so erhaltene Präpolymer-Lösung werden 21,6 g Diäthanolamin rasch zugegeben und 10 Minuten homogenisiert. Nach der Dosierung von 28,4 g Triäthylamin, 22,9 g Methylmethacrylat, 7,0 g Methacrylsäure und 14,0 g 2-Hydroxyäthylmethacrylat werden 1087,6 g Wasser mit einer Temperatur von 70 °C unter intensivem Rühren zu der Präpolymer-Lösung gegeben. Anschließend wird die Temperatur auf 80 °C erhöht und 0,7 g tert.-Butyl-hydroperoxid (80 %ig in Di-tert.-Butylperoxid) rasch zugetropft. Nach weiteren 30 Minuten wird eine Lösung von 1,3 g Ascorbinsäure in 130 g Wasser über einen Zeitraum von 90 Minuten dosiert. Die Temperatur wird für eine weitere Stunde bei 80 °C gehalten.

Die resultierende Polyurethan-Acryl-Hybrid-Dispersion wird auf Raumtemperatur abgekühlt und durch ein 5 µm Filtergewebe filtriert. Die Dispersion besitzt einen Festkörpergehalt von 36 % und einen pH-Wert von 6,7.

**Beispiel 3:**

261,0 g eines Polyesters hergestellt aus Neopentylglykol, Hexandiol-1,6, Isophthalsäure und Adipinsäure, mit einer Hydroxyl-Zahl von 41 und einer Säurezahl kleiner 2 werden mit 43,0 g Dimethylolpropionsäure, 3,5 g Hexandiol-1,6 und 120,5 g N-Methylpyrrolidon-2 auf 80 °C erwärmt. Anschließend werden über einen Zeitraum von 25 bis 30 Minuten unter Rühren 119,1 g Isophorondiisocyanat dosiert und so lange bei 80 °C gerührt, bis der Gehalt an freien Isocyanatgruppen 1,38 Gew.-%, bezogen auf die Gesamteinwaage, beträgt. In die so erhaltene Präpolymer-Lösung werden 23,4 g 2-Hydroxyäthylmethacrylat und 0,2 g 2,6-Di-tert.-butyl-4-methylphenol gegeben. Es wird weiter umgesetzt, bis keine freien Isocyanatgruppen mehr vorliegen. Nach Zugabe von 99,7 g Methylmethacrylat, 33,2 g 2-Äthylhexylacrylat und 60,0 g 2-Hydroxyäthylmethacrylat wird nach einer 5-minütigen Homogenisierungsphase mit 24,4 g Triäthylamin neutralisiert. Anschließend werden 1091,8 g Wasser mit einer Temperatur von 75 °C zu der Präpolymer-Lösung unter intensivem Rühren gegeben. Anschließend werden bei einer Temperatur von 80 °C 0,7 g tert.-Butylhydroperoxid (80%ig in Di-tert.-Butylperoxid) rasch zugetropft. Nach weiteren 30 Minuten wird eine Lösung von 1,3 g Ascorbinsäure in 130.0 g Wasser über einen Zeitraum von 90 Minuten dosiert.

Die resultierenden Polyurethan-Acryl-Hybrid-Dispersion wird auf Raumtemperatur abgekühlt und durch ein 5 µm Filtergewebe filtriert. Die Dispersion besitzt einen Festkörpergehalt von 32 % und einen pH-Wert von 7,1.

Gemäß den Beispielen 1 bis 3 hergestellte acrylierte Polyurethandispersionen wurden in Kombination mit einem handelsüblichen Polyisocyanathärter (Desmodur® VPLS 2032 der Bayer AG, wasseremulgierbares aliphatisches Polyisocyanat auf Basis von Hexamethylendiisocyanat) in einer Klarlackformulierung auf ihre Eigenschaften hin ausgeprüft. Als Vergleich wurde eine handelsübliche, nicht acrylierte OH-funktionelle Polyurethandispersion (Daotan® VTW 1225 der Hoechst AG) herangezogen.

**Anwendungsbeispiel 1.1:**

Zu 80,5 Gewichtsteilen einer Polyurethandispersion gemäß Beispiel 1 gibt man unter gutem Rühren 1 Gewichtsteil eines handelsüblichen Verlaufmittels (Additol® XW 390 der Hoechst AG), 5 Gewichtsteile Butylglykol und 3,5 Gewichtsteile entionisiertes Wasser. Der Ansatz wird kurz vor der Applikation mit der Härterlösung, bestehend aus 14,5 Gewichtsteilen Desmodur® VPLS 2032, 2,5 Gewichtsteilen Butylacetat und 0,9 Gewichtsteilen Testbenzin, unter einem Schnellrührer vermischt und ist dann applikationsfertig.

**Anwendungsbeispiel 2.1:**

Zu 80,5 Gewichtsteilen einer Polyurethandispersion gemäß Beispiel 2 gibt man unter gutem Rühren 1 Gewichtsteil eines handelsüblichen Verlaufmittels (Additol® XW 390 der Hoechst AG), 5 Gewichtsteile

Butylglykol und 3,5 Gewichtsteile entionisiertes Wasser. Der Ansatz wird kurz vor der Applikation mit der Härterlösung, bestehend aus 14,5 Gewichtsteilen Desmodur® VPLS 2032, 2,5 Gewichtsteilen Butylacetat und 0,9 Gewichtsteilen Testbenzin, unter einem Schnellrührer vermischt und ist dann applikationsfertig.

**Anwendungsbeispiel 3.1:**

Zu 80,5 Gewichtsteilen einer Polyurethandispersion gemäß Beispiel 3 gibt man unter gutem Rühren 1 Gewichtsteil eines handelsüblichen Verlaufmittels (Additol® XW 390 der Hoechst AG), 5 Gewichtsteile Butylglykol und 3,5 Gewichtsteile entionisiertes Wasser. Der Ansatz wird kurz vor der Applikation mit der Härterlösung, bestehend aus 12,9 Gewichtsteilen Desmodur® VPLS 2032, 2,2 Gewichtsteilen Butylacetat und 0,8 Gewichtsteilen Testbenzin, unter einem Schnellrührer vermischt und ist dann applikationsfertig.

**Vergleichs-Anwendungsbeispiel:**

Zu 86,2 Gewichtsteilen der OH-funktionellen, nicht-acrylierten Polyurethandispersion Daotan® VTW 1225 (Hoechst AG) gibt man unter gutem Rühren 1 Gewichtsteil eines handelsüblichen Verlaufmittels (Additol® XW 390 der Hoechst AG), 5,2 Gewichtsteile Butylacetat und 5,6 Gewichtsteile entionisiertes Wasser. Der Ansatz wird kurz vor der Applikation mit der Härterlösung, bestehend aus 17,3 Gewichtsteilen Desmodur® VPLS 2032, 3,3 Gewichtsteilen Butylacetat und 1,1 Gewichtsteilen Testbenzin, unter einem Schnellrührer vermischt und ist dann applikationsfertig.

Die fertigen Klarlackformulierungen wurden mit einer Naßfilmstärke von 150 µm (entsprechend einer Trockenfilmstärke von ca. 30 - 40 µm) auf Glasplatten bzw. Polycarbonatplatten aufgebracht, 10 min bei Raumtemperatur ablüften gelassen und anschließend 30 min bei 80 °C und danach 16 h bei 60 °C getrocknet.

Nach Abkühlen der Beschichtungen erfolgte die Prüfung (Ergebnisse in Tabelle 1 angegeben) folgender Eigenschaften:
allgemeines Aussehen der Beschichtung nach subjektiver Beurteilung
Haftung auf dem Substrat mit Gitterschnitt gem. DIN 53 151
Pendelhärte nach König gem. DIN 53 157
Beständigkeit gegen ausgewählte Lösungsmittel (Spalten 6 - 10); angegeben ist die Einwirkdauer, nach der die Beschichtungen weich und nicht mehr kratzfest sind.
Beständigkeit gegen ausgewählte Chemikalien (Spalten 11 und 12), Einwirkdauer 16 h. Bewertungsskala: i. O. = kein Angriff; b. i. O. = leichter Angriff, Beschichtung aber intakt; n. i. O. = Beschichtung sehr stark angegriffen oder völlig zerstört.

## TABELLE 1

| Anwendungs-beispiel | Aussehen | Haftung auf Glas | Haftung auf Polycarbonat | Pendelhärte | Beständigkeit gegen : | | | | | | |
|---|---|---|---|---|---|---|---|---|---|---|---|
| | | | | | Isopropanol | Isopropanol/ Wasser 1:1 | Äthanol | Äthanol/ Wasser 1:1 | FAM-Super-benzin | Teer | 5%ige Natronlauge |
| 1.1 | klar, glatt, rißfrei | Gt 0 | Gt 0 | 80 s | 20 min | 15 min | 4 min | 10 min | 1 min | b. i. O.* | i. O. |
| 1.2 | klar, glatt, rißfrei | Gt 0 | Gt 0 | 100 s | 5 min | 5 min | 2 min | 5 min | 1 min | b. i. O.* | i. O. |
| 1.3 | klar, glatt, rißfrei | Gt 0 | Gt 0 | 147 s | 20 min | 10 min | 4 min | 8 min | > 30 min | b. i. O.* | i. O. |
| Vergleich | klar, glatt, rißfrei | Gt 0 | Gt 0 | 90 s | 10 min | 10 min | 3 min | 5 min | 7 min | n. i. O. | n. i. O. |
| Spalte 1 | 2 | 3 | 4 | 5 | 6 | 7 | 8 | 9 | 10 | 11 | 12 |

* schwach gelbliche Verfärbung.

## Patentansprüche

1. Wasserverdünnbare Zweikomponenten-Überzugsmasse, enthaltend
   a) eine Polyisocyanatkomponente, bestehend aus einem oder mehreren organischen Polyisocyanaten, und
   b) eine wäßrige Polyurethan-Dispersion, hergestellt durch radikalisch initiierte Polymerisation von Polyurethan-Makromonomeren mit einem Gehalt an Carbon-, Phosphon- oder Sulfonsäuregruppen, lateralen und/oder terminalen Vinylgruppen, sowie gegebenenfalls Hydroxyl-, Urethan-, Thiourethan und/oder Harnstoffgruppen.

2. Überzugsmasse nach Anspruch 1, dadurch gekennzeichnet, daß die wäßrige Polyurethan-Dispersion b) hergestellt wird durch radikalisch initiierte Polymerisation eines Urethan-Makromonomeren, das erhalten wird durch Umsetzung von
   (A) Polyhydroxyverbindungen, ausgewählt aus
      (A1) Polyhydroxypolyäthern,
      (A2) Polyhydroxypolyestern
      (A3) Polyhydroxypolycarbonaten,
      jeweils einzeln oder im Gemisch, gegebenenfalls unter Zusatz von
      (A4) niedermolekularen Verbindungen, die zwei oder mehrere funktionelle Gruppen ausgewählt aus Hydroxyl- Amino- und Mercaptogruppen aufweisen,
   (B) Polyisocyanaten,
   (C) Vinylverbindungen mit mindestens einer Vinylgruppe und
      (C1) einer gegenüber Isocyanat-Gruppen reaktiven Gruppierung ausgewählt aus Amino-, Hydroxy- und Mercapto-Gruppen, oder
      (C2) mindestens zwei gegenüber Isocyanat-gruppen reaktiven Gruppierungen, ausgewählt wie oben,
      wobei die Vinylmonomeren (C1) und (C2) gegebenenfalls im Gemisch eingesetzt werden können,
   (D) säuregruppenhaltige Polyhydroxyverbindungen, deren Säuregruppen ausgewählt sind aus Carbonsäure-, Sulfonsäure- und Phosphonsäuregruppen, sowie gegebenenfalls
      (D') säuregruppenhaltigen Polyaminen, Polymercaptanen oder Aminoalkoholen oder Aminomercaptanen, deren Säuregruppen wie in (D) ausgewählt sind,

   und anschließende Reaktion mit Alkoholen, Aminen oder Mercaptanen, und das gekennzeichnet ist durch seinen Gehalt an Säuregruppen sowie terminalen Hydroxylgruppen und terminalen und/oder lateralen Vinylgruppen.

3. Wasserverdünnbare Zweikomponenten-Überzugsmasse nach Anspruch 1, dadurch gekennzeichnet, daß das Urethan-Makromonomere in Gegenwart einer Vinylverbindung (E) oder eines Gemisches aus mehreren solchen Vinylverbindungen hergestellt wird, wobei diese Vinylverbindungen ausgewählt sind aus den Gruppen
   - der Ester von olefinisch ungesättigten Mono- oder Polycarbonsäuren mit ein- oder mehrwertigen (cyclo)aliphatischen, aromatischen oder gemischt aliphatisch-aromatischen Alkoholen mit 1 bis 15 C-Atomen,
   - der Amide oder Nitrile der oben beschriebenen Carbonsäuren, die im Fall der Amide gegebenenfalls am Stickstoffatom substituiert sein können,
   - der Ester von ein- oder mehrwertigen olefinisch ungesättigten Alkoholen mit (cyclo)aliphatischen, aromatischen oder gemischt aliphatisch-aromatischen Carbonsäuren mit 2 bis 15 C-Atomen,
   - der olefinisch ungesättigten Aldehyde und/oder Ketone,
   - der Äther von ein- oder mehrwertigen olefinisch ungesättigten Alkoholen mit (cyclo)aliphatischen, aromatischen oder gemischt aliphatisch-aromatischen Alkoholen mit 1 bis 15 C-Atomen,
   - den Vinyl- und Vinyliden-Halogeniden und
   - den Vinylaromaten.

4. Überzugsmasse nach Anspruch 1, dadurch gekennzeichnet, daß die wäßrige Polyurethan-Dispersion b) hergestellt wird durch radikalisch initiierte Polymerisation in einem Gemisch aus Wasser und einem gegenüber Isocyanatgruppen inerten organischen Lösemittel, gegebenenfalls in Anwesenheit von mit den Polyurethan-Makromonomeren copolymerisierbaren ungesättigten Monomeren (E), und gegebenenfalls Abdestillation des organischen Lösemittels vor oder nach der radikalischen Polymerisation.

5. Überzugsmasse nach Anspruch 1, dadurch gekennzeichnet, daß die wäßrige Polyurethan-Dispersion b) hergestellt wird durch die radikalisch initiierte Polymerisation in einem als Lösemittel dienenden, mit den Polyurethan-Makromonomeren copolymerisierbaren ungesättigten Monomeren (E), gegebenenfalls in Gegenwart weiterer copolymerisierbarer ungesättigter Monomere (E).

6. Überzugsmasse nach Anspruch 1, dadurch gekennzeichnet, daß die Polyisocyanatkomponente a) eine mittlere Isocyanatfunktionalität von 2 bis 5 aufweist.

7. Überzugsmasse nach Anspruch 1, dadurch gekennzeichnet, daß die Polyisocyanatkomponente a) aus einem oder mehreren Polyisocyanaten besteht wobei die Isocyanatgruppen mit aliphatischen Kohlenstoffatomen verknüpft sind.

8. Überzugsmasse nach Anspruch 1, dadurch gekennzeichnet, daß die Isocyanatkomponente a) Diisocyanatderivate enthält, die Biuret-, Urethan-, Uretdion- oder Isocyanuratstrukturen aufweisen.

9. Überzugsmasse nach Anspruch 1, dadurch gekennzeichnet, daß die Isocyanatkomponente a) Hexamethylendiisocyanat und/oder dessen Derivate enthält.

10. Überzugsmasse nach Anspruch 1, dadurch gekennzeichnet, daß die Komponente (A) Polyhydroxypolyester enthält.

11. Überzugsmasse nach Anspruch 1, dadurch gekennzeichnet, daß die Komponente (A) eine Mischung von einem oder mehreren Polyhydroxypolyestern mit einer oder mehreren niedermolekularen Verbindungen ist, die zwei oder mehr funktionelle Gruppen ausgewählt aus Hydroxyl-, Amino- und Mercaptogruppen tragen.

12. Überzugsmasse nach Anspruch 1, dadurch gekennzeichnet, daß die Komponente (C) ein Monomer mit einer Vinylgruppe und mindestens zwei Hydroxylgruppen enthält.

13. Überzugsmasse nach Anspruch 1, dadurch gekennzeichnet, daß die Komponente (D) mindestens eine Verbindung mit zwei Hydroxylgruppen und einer Gruppe ausgewählt aus Carbon-, Sulfon- und Phosphonsäuregruppen enthält.

14. Überzugsmasse nach Anspruch 1, dadurch gekennzeichnet, daß die Komponente (E) mindestens ein Alkylacrylat oder -methacrylat mit 1 bis 20 Kohlenstoffatomen in der Alkylgruppe enthält.

15. Verfahren zur Herstellung von wasserverdünnbaren Zweikomponenten-Überzugsmassen gemäß den Anspruch 1, dadurch gekennzeichnet, daß vor der Polymerisation der Urethan-Makromonomeren sowie gegebenenfalls des Reaktivverdünners (E) mindestens ein weiteres Vinylmonomer zugefügt wird, das funktionelle Gruppen trägt ausgewählt aus Carboxyl-, Hydroxyl-, Amino-, Äther- und Mercaptogruppen.

16. Verfahren nach Anspruch 15, dadurch gekennzeichnet, daß der Reaktivverdünner (E) erst nach dem Aufbau des Urethan-Makromonomeren, aber vor oder während der Polymerisation zugefügt wird.

17. Verwendung der Überzugsmassen nach Anspruch 1 zur Herstellung von Beschichtungen.

Europäisches Patentamt

# EUROPÄISCHER RECHERCHENBERICHT

Nummer der Anmeldung
EP 94 11 9144

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 353 797 (AKZO)<br>* Seite 3, Zeile 32 - Seite 6, Zeile 8; Ansprüche 1-21 * | 1-17 | C08G18/67<br>C09D175/16 |
| X | EP-A-0 473 169 (PPG INDUSTRIES)<br>* Seite 2, Zeile 56 - Seite 7, Zeile 11; Ansprüche 1-27 * | 1-17 | |
| X | EP-A-0 522 420 (HOECHST)<br>* Spalte 1, Zeile 19 - Spalte 7, Zeile 53 *<br>* Spalte 10, Zeile 3 - Zeile 57; Ansprüche * | 1-17 | |
| D | & DE-A-41 22 266 | | |
| A | EP-A-0 480 251 (BASF)<br>* Ansprüche; Beispiele * | 1 | |
| D,A | EP-A-0 098 752 (RESEM) | | |

RECHERCHIERTE SACHGEBIETE (Int.Cl.6)

C08G
C09D
C08F

Der vorliegende Recherchenbericht wurde für alle Patentansprüche erstellt

| Recherchenort | Abschlußdatum der Recherche | Prüfer |
|---|---|---|
| DEN HAAG | 10. März 1995 | Bourgonje, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument